# FASCICULE DE BREVET EUROPEEN

(11) **EP 1 100 717 B1**
(45) Date de publication et mention de la délivrance du brevet: **19.03.2003**
(21) Numéro de dépôt: 99929479.6
(22) Date de dépôt: 13.07.1999
(51) Int. Cl.: B63H 23/24

(54) **BATEAU OU NAVIRE A PROPULSION ELECTRIQUE**
ELEKTRISCH-ANGETRIEBENES WASSERFAHRZEUG
BOAT OR VESSEL WITH ELECTRIC DRIVE

(30) Priorité: 29.07.1998 FR 9809683
(43) Date de publication de la demande: 23.05.2001
(73) Titulaire: Alternatives Energies, 17000 La Rochelle (FR)
(72) Inventeur: BOULY, Christian, F-17000 La Rochelle (FR)
(74) Mandataire: Doireau, Marc
(86) Numéro de dépôt international: FR9901710
(87) Numéro de publication internationale: WO00006450

(56) Documents cités:
- CH-A- 637 584
- FR-A- 2 322 780
- FR-A- 2 484 356
- US-A- 4 075 970
- US-A- 4 114 555
- US-A- 4 406 630
- US-A- 5 403 220
- US-A- 5 669 794
- "SOLAR POWER FOR MARINE PROPULSION" SHIPPING WORLD & SHIPBUILDER, vol. 108, no. 4079, décembre 1991 (1991-12), pages 390-394, XP002099833 BASINGSTOKE,HANTS,GB
- "WORLD'S MOST POWERFUL THRUSTERS" SHIPPING WORLD AND SHIPBUILDER, vol. 108, no. 4079, décembre 1991 (1991-12), page 390 XP000241683 BASINGSTOKE,HANTS,GB

## Description

L'invention concerne un bateau ou navire à propulsion électrique, notamment un bateau ou navire de petite ou de moyenne taille, utilisable pour les loisirs, le transport de passagers et/ou de marchandises, etc., en mer ou sur des cours d'eau ou des plans d'eau tels que des fleuves, des canaux ou des lacs, par exemple.

On a déjà proposé, dans un souci de rentabilité et de préservation de l'environnement, de remplacer les moteurs à combustion interne utilisés pour la propulsion des bateaux et des navires par des moteurs électriques alimentés en énergie par des batteries électriques associées à des moyens de charge.

Les moteurs électriques peuvent être placés à bord des bateaux ou des navires, à la place des moteurs à combustion interne traditionnels, mais il est plus avantageux de les loger dans des boîtiers étanches immergeables et éventuellement orientables qui sont fixés sous les coques des bateaux ou des navires ou qui sont portés par des systèmes de montage hors-bord, ces boîtiers comprenant un arbre de sortie sur lequel est montée une hélice entraînée en rotation. Cela permet de supprimer les transmissions classiques entre les hélices et les moteurs logés à bord, ainsi que les systèmes de refroidissement des moteurs, et l'on bénéficie de plus d'une propulsion silencieuse et non polluante. Un navire de ce type est décrit en FR-4-2 322 780.

Ces systèmes connus de propulsion ont toutefois été développés pour des navires de grande taille et sont équipés de moteurs électriques d'un type particulier, sophistiqué et coûteux, ayant des puissances de l'ordre du mégawatt et davantage, qui sont en général alimentés en énergie par des alternateurs entraînés par des turbines ou des moteurs diesel. Il n'existe pas actuellement de systèmes de propulsion électrique ayant des performances intéressantes pour un coût acceptable, qui pourraient équiper des bateaux de petite et moyenne taille (ayant typiquement des longueurs comprises entre 3 et 50 mètres environ) et qui seraient alimentés par des batteries électriques ayant un poids et un encombrement compatibles avec ces bateaux de petite et moyenne taille.

L'invention a pour but d'apporter une solution simple, efficace et peu coûteuse à ce problème.

Elle a pour objet un système de propulsion à moteur électrique qui soit plus efficace, plus fiable et plus performant que les systèmes antérieurs connus et qui soit de plus relativement peu lourd et peu encombrant, donc facile à installer sur un bateau ou un navire de petite ou moyenne taille.

Elle a également pour objet un système de propulsion à moteur électrique, utilisable comme système principal de propulsion ou comme système auxiliaire (à bord d'un voilier par exemple).

Elle propose, à cet effet, un bateau ou navire à propulsion électrique, comprenant au moins un moteur électrique placé dans un boîtier étanche immergeable et éventuellement orientable, une hélice montée sur un arbre de sortie du boîtier pour être entraînée en rotation par le moteur précité, des batteries électriques d'alimentation du moteur et des moyens de charge des batteries, caractérisé en ce que le moteur est à courant alternatif et est relié à l'hélice par un réducteur à engrenage, placé à l'intérieur du boîtier précité pour être refroidi comme le moteur par échange de chaleur avec l'eau extérieure au boîtier.

Le système de propulsion selon l'invention présente des avantages multiples :
- le stator du moteur à courant alternatif porte les bobinages et peut être refroidi efficacement par simple contact avec la paroi du boîtier,
- l'utilisation d'un réducteur à engrenage entre l'hélice et le moteur électrique permet d'utiliser un moteur à vitesse de rotation relativement élevée, fournissant une puissance suffisante quand il a des dimensions relativement faibles (une diminution des dimensions du moteur se traduisant par une diminution de la résistance au déplacement du fait que le moteur est immergé),
- le réducteur permet d'utiliser une hélice de grand diamètre à vitesse de rotation relativement faible, ayant un bon rendement,
- le réducteur est refroidi par échange de chaleur avec l'eau extérieure et peut donc être utilisé à vitesse de rotation élevée sans défaut de lubrification, donc avec une durée de vie importante,
- l'ensemble propulseur (moteur-réducteur-hélice) nécessite très peu de maintenance et a une durée de vie très longue,
- l'ensemble propulseur génère très peu de bruit et de vibrations et ne provoque aucun dégagement de chaleur à l'intérieur du bateau ou du navire,
- l'optimisation de l'ensemble moteur-réducteur-hélice permet de réduire la consommation électrique et donc d'augmenter l'autonomie du système de propulsion fonctionnant sur des batteries embarquées. A autonomie égale, cela permet de diminuer la quantité de batteries nécessaires, et donc leur poids et leur encombrement.

Selon une autre caractéristique particulièrement avantageuse de l'invention, les moyens d'alimentation électrique du moteur précité comprennent un convertisseur de puissance continu-alternatif, qui est logé dans le boîtier étanche pour être refroidi par échange de chaleur avec l'eau extérieure à ce boîtier.

Ce refroidissement du convertisseur de puissance continu-alternatif permet de supprimer les radiateurs lourds et volumineux qui devraient normalement être associés aux composants électroniques de ce convertisseur. On diminue ainsi le poids, l'encombrement et le coût du convertisseur de puissance et on augmente considérablement sa longévité et sa fiabilité.

Dans un mode de réalisation préféré de l'invention, le moteur électrique précité est un moteur synchrone triphasé autopiloté à rotor à aimants permanents, et le réducteur précité est un réducteur à engrenage planétaire.

En variante, on peut utiliser un ensemble de propulsion comprenant une turbine entraînée directement par un moteur électrique du type précité.

Selon encore une autre caractéristique de l'invention, les moyens de charge des batteries embarquées comprennent des moyens de liaison par induction à un réseau de distribution d'énergie électrique.

Cela permet notamment de réaliser la charge des batteries de façon automatique ou quasi-automatique sans intervention manuelle de connexion d'un chargeur sur un réseau de distribution électrique. On évite ainsi des risques de court-circuit et de mauvais contact dûs à des défauts de connexion électrique.

Par ailleurs, ce type de charge se révèle particulièrement avantageux lorsque le bateau ou navire est un "passeur" destiné à faire des allers et retours réguliers entre deux points ou à suivre un trajet prédéterminé, la recharge des batteries pouvant avoir lieu de façon automatique chaque fois que le bateau ou navire s'arrête en un point déterminé de son trajet pour débarquer et embarquer des passagers et/ou des marchandises, par exemple.

Avantageusement, les moyens de charge des batteries peuvent également comprendre des panneaux solaires photovoltaïques, agencés par exemple sur le toit du bateau ou du navire, ce qui permet d'augmenter l'autonomie de déplacement de façon importante à faible vitesse et de réduire les coût de fonctionnement.

Des panneaux solaires peuvent également être installés à terre pour participer à la charge des batteries du bateau ou du navire quand celui-ci est à quai, et pour injecter de l'énergie dans un réseau de distribution le reste du temps.

Selon un autre aspect de l'invention, l'ensemble propulseur est porté par une structure de support s'étendant à l'intérieur d'un puits formé dans la coque du bateau ou du navire, ce puits ayant des dimensions transversales permettant le passage de l'ensemble moteur-réducteur-hélice par l'intérieur du puits pour son montage sur le bateau ou navire et son démontage.

Cette caractéristique de l'invention permet d'intervenir sur l'ensemble propulseur quand le bateau ou navire est à flot et sans qu'il soit nécessaire de l'amener jusqu'à un chantier naval et de le sortir de l'eau. Cela facilite beaucoup la maintenance et les réparations de l'ensemble propulseur et réduit leur coût et les périodes d'immobilisation du bateau ou du navire de façon très importante et extrêmement avantageuse pour les propriétaires ou les exploitants du bateau ou du navire.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en perspective d'un navire selon l'invention;
- la figure 2 représente schématiquement les moyens de montage d'un ensemble propulseur sur une coque de ce navire;
- la figure 3 représente schématiquement les moyens d'alimentation électrique du système de propulsion selon l'invention;
- la figure 4 est une vue schématique partielle de dessus d'un système d'amarrage automatique permettant également la charge des batteries par induction.
- la figure 5 est une vue schématique partielle d'une variante de l'invention.

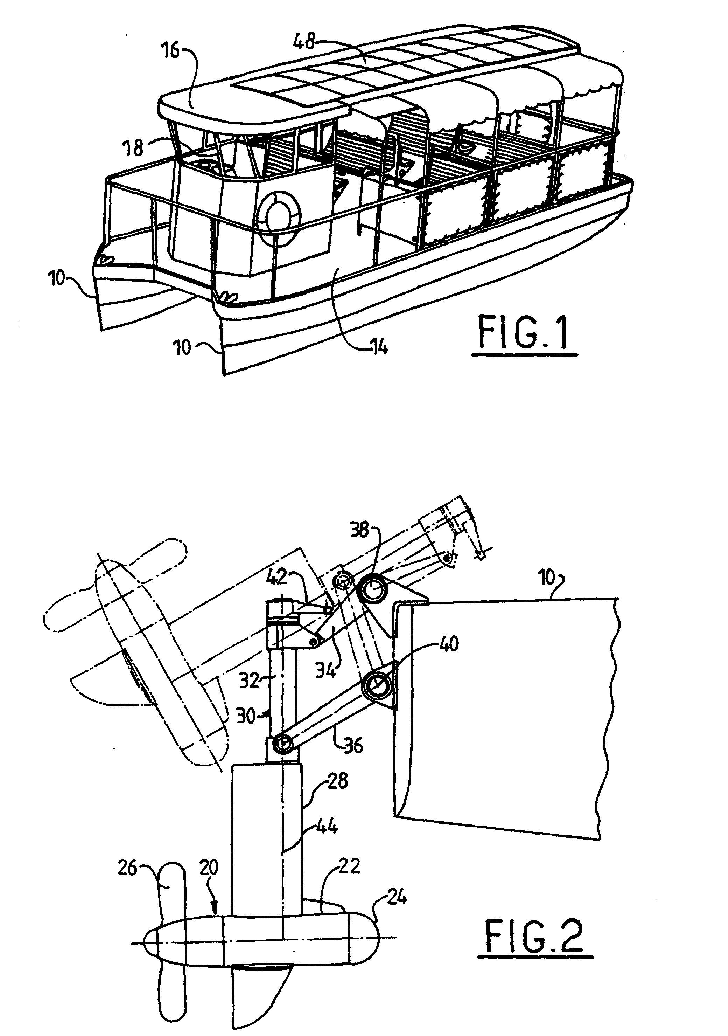

On se réfère d'abord à la figure 1, qui représente schématiquement, à titre d'exemple, un navire selon l'invention, destiné au transport de passagers sur un trajet prédéterminé par exemple à l'intérieur d'un port, dans un estuaire ou sur un lac, sur un fleuve, un canal, etc.

Ce navire est du type catamaran et comprend deux coques 10 parallèles, un pont 14 sur lequel sont installées des rangées de sièges pour les passagers, un toit 16 de protection contre la pluie et le soleil et un poste de pilotage 18 à partir duquel un seul homme peut commander le navire et le faire manoeuvrer.

Les deux coques 10 sont reliés entre elles par des poutres transversales dont on détermine la longueur en fonction du nombre de passagers pour lequel le navire est conçu. On peut aussi, avec les mêmes moules, fabriquer des coques plus ou moins longues en fonction de la capacité de transport désirée.

Chaque coque 10 du navire est équipée (figure 2) d'un ensemble propulseur 20 à montage hors-bord, cet ensemble comprenant un boîtier cylindrique étanche 22 qui contient un convertisseur de puissance continu-alternatif placé dans la partie avant 24 du boîtier, un moteur électrique placé dans le boîtier immédiatement en arrière du convertisseur de puissance, un réducteur à entrée et sortie axiales placé dans le boîtier sur l'arbre de sortie du moteur électrique, et une hélice 26 montée sur l'arbre de sortie du réducteur, à l'arrière du boîtier 22, avec un système coupe-orins intégré au boîtier à sa jonction avec l'hélice.

En variante, l'hélice 26 pourrait se trouver à l'avant du boîtier 22, le moteur électrique étant alors à l'arrière de ce boîtier.

Eventuellement, les carters du moteur et du réducteur peuvent constituer le boîtier étanche précité.

Ce boîtier étanche contient avantageusement une graisse thermique ou un fluide bon conducteur de la chaleur pour améliorer le refroidissement du moteur, du réducteur et des composants du convertisseur par échange de chaleur avec l'eau extérieure, l'efficacité de ce refroidissement étant primordiale (elle permet par exemple de doubler la puissance fournie par le moteur électrique).

L'ensemble propulseur 20 est fixé sur un safran 28 porté par un dispositif de relevage 30 à bras articulés formant un trapèze déformable, permettant de relever l'ensemble propulseur 20 de la position représentée en traits pleins pour l'amener dans la position hors service représentée en traits pointillés, en le déplaçant d'abord verticalement et parallèlement à lui-même, puis en le faisant basculer autour d'un axe transversal horizontal.

Plus précisément, ce dispositif comprend un tube 32 s'étendant dans le prolongement du safran et relié par deux bras articulés 34 et 36 de longueurs différentes à deux arbres transversaux horizontaux 38 et 40 portés par la partie arrière de la coque 10, l'arbre supérieur 38 pouvant être relié à un moyen moteur d'entraînement en rotation pour un relevage et une descente motorisés de l'ensemble propulseur 20.

Le relevage vertical du propulseur 20, sensiblement parallèlement à lui-même à partir de la position représentée en traits pleins en figure 2, permet d'adapter la position verticale de cet ensemble propulseur 20 par rapport à la coque 10 en fonction de la hauteur d'eau sous la coque et de réduire le tirant d'eau, par exemple pour un accostage ou un déplacement du navire à marée basse.

Un bras radial 42 est monté à l'extrémité supérieure du tube 32 relié au safran et permet une orientation de l'ensemble propulseur par rotation autour de l'axe 44 du tube 32.

Les câbles de liaison entre les batteries et l'ensemble propulseur peuvent passer par le tube 32 et par le safran 28.

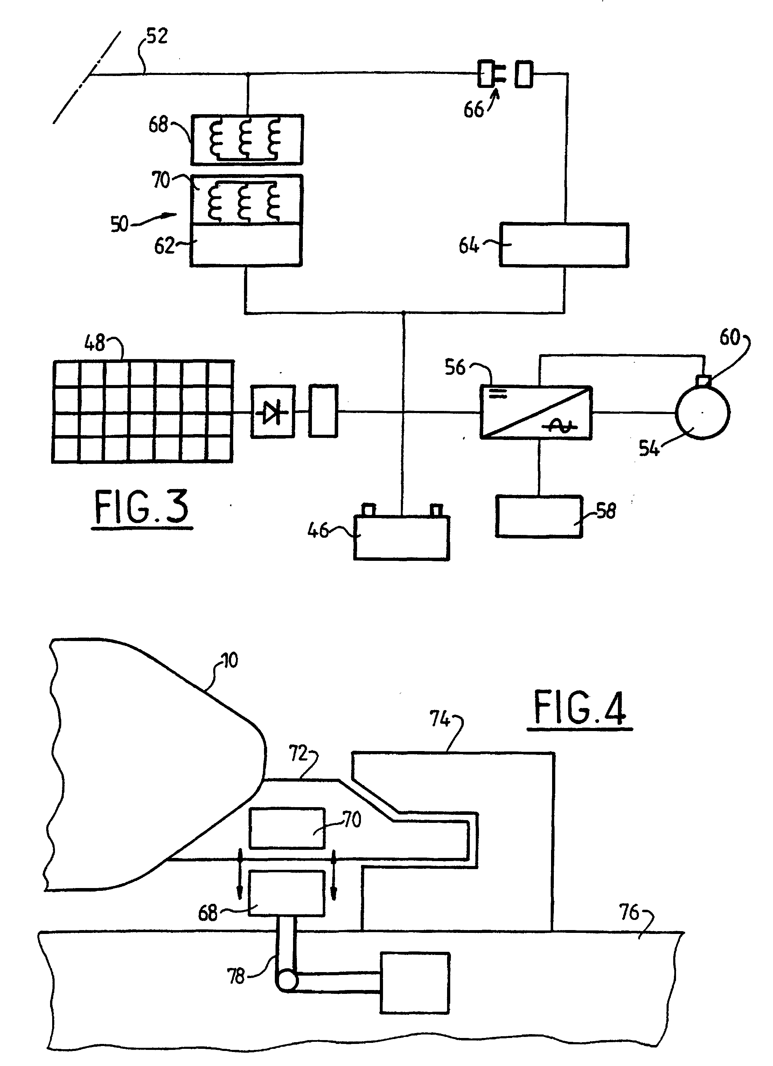

Les moyens d'alimentation à énergie électrique des moteurs du navire selon l'invention sont représentés schématiquement en figure 3 et comprennent un ensemble de batteries électriques 46 embarquées à bord du navire et reliées, d'une part, à des panneaux solaires 48 montés sur le toit du navire, d'autre part à des moyens 50 de charge à partir d'un réseau extérieur 52 de distribution d'énergie électrique, et encore d'autre part, pour chaque moteur électrique 54, à un convertisseur de puissance continu-alternatif 56 à fréquence variable, associé à un système 58 de commande de vitesse de rotation du moteur 54 et à un capteur 60 de repérage de la position angulaire exacte du rotor du moteur 54.

De préférence, chaque moteur 54 est un moteur synchrone triphasé autopiloté, à rotor équipé d'aimants permanents, et le reseau 52 est triphasé.

Selon l'invention, les moyens de charge 50 comprennent un premier circuit de charge 62 associé à des moyens de liaison par induction au réseau de distribution électrique 52 et un second circuit de charge 64, monté en parallèle sur le premier et pouvant être relié au réseau 52 par des moyens classiques de connexion 66 à emboîtement, ces deux circuits pouvant avoir des capacités de charge semblables ou différentes.

Les moyens de liaison par induction du premier circuit de charge 62 au réseau 52 comprennent un primaire 68 à trois enroulements connectés au réseau de distribution 52 et un secondaire 70 à trois enroulements connectés au circuit de charge 62 avec éventuellement un interrupteur (non représenté) dans la connexion entre le réseau 52 et le primaire 68 et/ou dans la connexion entre le secondaire 70 et le circuit de charge 62.

Il suffit, pour assurer la charge des batteries 46 par l'intermédiaire du réseau 52 et du circuit de charge 62, de disposer les enroulements primaires et secondaires 68, 70 dans une position relative déterminée dans laquelle un circuit magnétique fermé est établi entre les enroulements, qui fonctionnent alors en transformateur inductif triphasé.

Cette disposition relative des enroulements peut être assurée, conformément à l'invention, par l'intermédiaire d'un système d'amarrage tel que celui représenté schématiquement en figure 4.

Dans cette figure, la partie avant d'une coque 10 du navire est équipée d'un doigt d'amarrage 72 s'étendant en saillie vers l'extérieur, destiné à coopérer par engagement ou emboîtement avec un bloc d'amarrage 74 monté sur un quai ou un ponton 76 le long duquel le navire doit être amarré. Le secondaire 70 est monté sur le doigt d'amarrage 72 et le primaire 68 est porté par un mécanisme 78 qui permet de le déposer sur le secondaire pour la charge des batteries et de le relever pour le départ du navire, ce mécanisme étant conçu pour permettre des mouvements relatifs entre le navire et le ponton, sous l'effet des vagues par exemple.

Dans un mode de réalisation préféré de l'invention, les batteries 46 sont du type nickel-cadmium pour des raisons de longévité. Elles sont également mieux adaptées à un usage intensif des moteurs 54. Ces batteries peuvent être constituées d'une pluralité d'éléments connectés en série (par exemple 200 éléments de 1,2 volt permettent de fournir une tension de 240 volts) pour alimenter deux convertisseurs continu-alternatif 56 agencés en parallèle et reliés chacun à un moteur 54 d'une puissance nominale de l'ordre de 6 kW.

Les batteries ont dans cet exemple une capacité de 80 Ah et sont chargées avec un courant de 40 A par le premier circuit de charge 62. Le second circuit de charge 64 peut assurer, par exemple de nuit ou en dehors des périodes d'usage du navire, une surcharge avec un courant d'intensité 10 fois plus faible, cette surcharge permettant d'éviter les effets de mémoire des batteries.

Les panneaux solaires 48 montés à bord comprennent une pluralité d'éléments connectés en série, permettant par exemple de charger les batteries 46 par l'intermédiaire d'un circuit à diodes et d'un régulateur de charge et/ou d'alimenter les moteurs 54 avec un courant maximal de l'ordre de 4 A.

Lorsque le navire 10 est utilisé pour effectuer de façon régulière un trajet prédéterminé, la recharge des batteries 46 peut s'effectuer, de façon suffisante pour compenser la quantité d'énergie qui vient d'être consommée, lorsque le navire est amarré pendant une certaine durée à un quai ou un ponton équipé des moyens de charge par induction décrits en référence aux figures 3 et 4. Par exemple, un arrêt de deux minutes au ponton 76 permet de recharger les batteries en compensant la quantité d'énergie consommée pendant un trajet de quatre minutes.

A titre d'exemple non limitatif, on précisera qu'un navire tel que celui représenté en figure 1, ayant une longueur d'une dizaine de mètres et pouvant transporter de 30 à 50 passagers à une vitesse de 5 noeuds environ, est équipé de deux ensembles propulseurs 20 tels que celui représenté en figure 2, comprenant chacun un moteur électrique d'une puissance nominale de l'ordre de 6 kW, chaque ensemble 20 ayant un diamètre extérieur d'environ 160 mm et étant équipé d'une hélice 26 d'un diamètre de 560 mm. Le poids des batteries équipant ce navire est de l'ordre de 650 kg, pour une autonomie de fonctionnement d'environ 7 h sans recharge des batteries.

Il est bien entendu possible d'utiliser dans le système de propulsion selon l'invention des moteurs électriques beaucoup plus puissants sans que cela entraîne une augmentation trop importante du diamètre de l'ensemble propulseur (un moteur d'une puissance nominale de 100 kW ayant par exemple un diamètre de l'ordre de 250 mm à 300 mm).

De nombreuses modifications peuvent être apportées aux moyens décrits et représentés, sans sortir du cadre de l'invention. Par exemple, les ensembles propulseurs 20 peuvent être non orientables et on utilise alors une commande différentielle de vitesse des moteurs 54 pour diriger le bateau ou le navire.

Les moteurs 54 peuvent être des moteurs asynchrones triphasés. Les circuits de charge des batteries peuvent être à bord des bateaux ou des navires ou à terre. Eventuellement, un circuit de charge (à liaison par induction) peut être à bord, et un circuit de charge à liaison par connection classique peut être prévu sur un quai ou un ponton. De même, des panneaux solaires photovoltaïques peuvent être installés à bord et/ou à terre.

Dans certains cas (par exemple, déplacement sur un plan d'eau dont il faut protéger la flore), il peut être avantageux d'utiliser un ensemble propulseur comprenant une turbine entraînée directement par un moteur électrique.

Dans le cas des navires de moyenne et de grande taille (par exemple de l'ordre de 50 m ou davantage), il sera avantageux d'alimenter les moteurs électriques par des alternateurs entraînés par des moteurs Diesel montés à bord, ce qui permet de disposer d'une puissance électrique importante tout en conservant les avantages des moteurs électriques immergés, aussi bien au plan de leur utilisation qu'au plan de la construction des bateaux et navires.

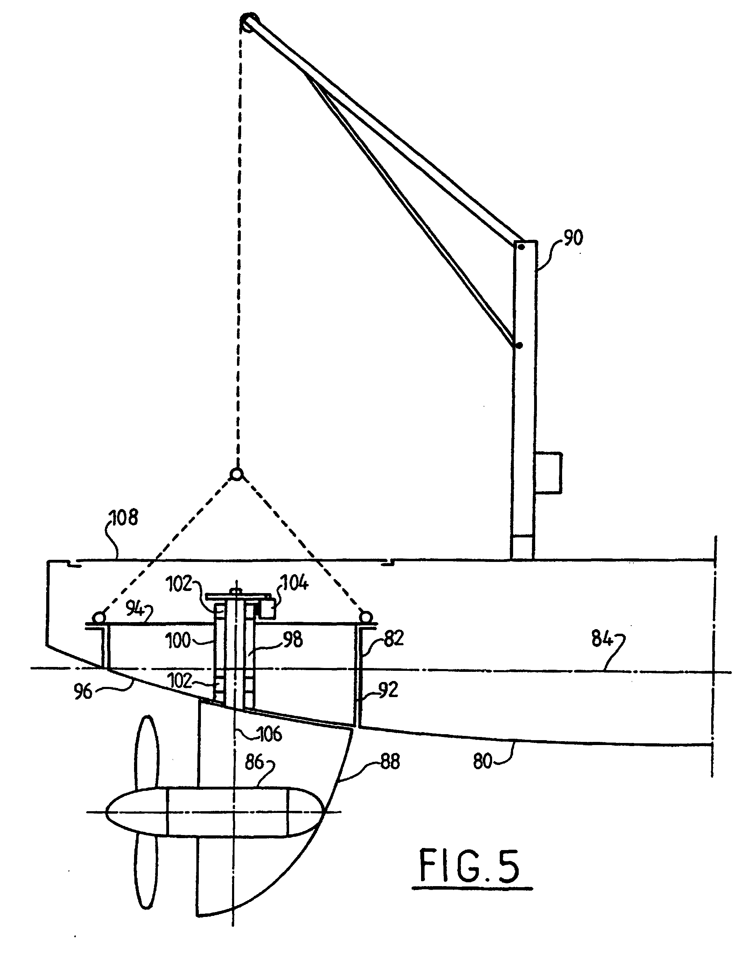

De plus, lorsque les bateaux ou les navires ont une taille relativement importante, le ou les ensembles propulseurs ne sont plus à montage hors-bord comme représenté en figure 2, mais sont fixés sous la coque, avantageusement comme représenté en figure 5.

Dans cette figure, la coque 80 du bateau ou du navire comporte un puits 82 qui s'étend verticalement à l'intérieur du bateau ou du navire sur une certaine hauteur de telle sorte que son extrémité supérieure soit toujours au-dessus de la ligne de flottaison 84 du bateau ou navire à pleine charge. Ce puits 82 a des dimensions transversales supérieures aux dimensions de l'ensemble propulseur 86 et du safran 88 pour permettre leur descente et leur relevage par l'intérieur du puits, au moyen d'une grue 90 par exemple.

Le puits 82 est sensiblement rempli et obturé par un caisson étanche 92 dont le couvercle 94 ferme l'extrémité supérieure du puits et lui est fixé de façon démontable par exemple par des boulons, et dont le fond 96 forme une surface continue ou quasi-continue avec la coque 80.

L'ensemble propulseur 86 et le safran 88 sont portés par un montant vertical 98 qui s'étend dans un conduit vertical 100 du caisson et qui est supporté et guidé dans ce conduit par des paliers 102. L'extrémité supérieure du montant 98 est associée à des moyens 104 de commande d'orientation de l'ensemble propulseur 86 autour d'un axe vertical 106.

Une écoutille du pont du bateau ou du navire fermée par un panneau amovible 108 permet un accès vertical au caisson 92.

En cas de panne ou d'avarie de l'ensemble propulseur 86 ou pour sa maintenance, on retire le panneau 108, on déboulonne le couvercle 94, on fixe à celui-ci une élingue et on sort l'ensemble propulseur 86 par le puits 82 au moyen de la grue 90, celle-ci se trouvant soit à quai, soit à bord du bateau ou du navire (cas d'une petite grue démontable et amovible).

Avantageusement et lorsque cela est possible, on procédera à un échange standard de l'ensemble propulseur 86.

Il est donc possible, selon l'invention, de changer l'ensemble propulseur d'un bateau ou d'un navire en un laps de temps relativement bref, sans immobilisation longue du bateau ou du navire et sans qu'il soit nécessaire d'amener le bateau ou le navire dans un chantier naval et de le sortir de l'eau.

## Revendications

1. Bateau ou navire à propulsion électrique, comprenant au moins un moteur électrique (54) placé dans un boîtier étanche (22) immergeable et éventuellement orientable, une hélice (26) montée sur un arbre de sortie du boîtier (22) pour être entraînée en rotation par le moteur précité, des batteries électriques (46) d'alimentation du moteur et des moyens de charge des batteries, **caractérisé en ce que** le moteur (54) est à courant alternatif et est relié à l'hélice (26) par un réducteur à engrenage placé à l'intérieur du boîtier (22) précité pour être refroidi comme le moteur par échange de chaleur avec l'eau extérieure au boîtier, les moyens de charge des batteries (46) comprenant des moyens (68, 70) de liaison par induction à un réseau (52) de distribution d'énergie électrique.

2. Bateau ou navire selon la revendication 1, **caractérisé en ce que** les moyens d'alimentation électrique du moteur comprennent un convertisseur de puissance continu-alternatif (56) logé dans le boîtier (22) précité pour être refroidi par échange de chaleur avec l'eau extérieure au boîtier.

3. Bateau ou navire selon la revendication 1 ou 2, **caractérisé en ce que** le moteur (54) est un moteur synchrone triphasé autopiloté à rotor à aimants permanents, ou un moteur asynchrone triphasé.

4. Bateau ou navire selon l'une des revendications précédentes, **caractérisé en ce que** le réducteur précité est un réducteur à engrenage planétaire.

5. Bateau ou navire selon la revendication 4, **caractérisé en ce que** les moyens de liaison comprennent un primaire (68) connecté au réseau de distribution et un secondaire (70) connecté à un circuit (62) de charge des batteries, ces deux enroulements étant intégrés à des moyens réalisés en deux parties, l'une montée sur le bateau ou le navire, l'autre montée sur un quai, un ponton (76) ou analogue, et comprenant un mécanisme (78) permettant de les rapprocher l'une de l'autre pour la S charge des batteries.

6. Bateau ou navire selon la revendication 5, **caractérisé en ce que** les moyens de charge comprennent un second circuit de charge (64) monté en parallèle sur le premier circuit de charge (62) et des moyens (66) de connexion par emboîtement du second circuit de charge (64) au réseau de distribution d'énergie électrique, les deux circuits de charge ayant des capacités de charge semblables ou différentes.

7. Bateau ou navire selon l'une des revendications précédentes, **caractérisé en ce que** les moyens de charge comprennent également des panneaux solaires (48) photovoltaïques, reliés aux batteries (46) précitées.

8. Bateau ou navire selon l'une des revendications précédentes, **caractérisé en ce que** les batteries (46) sont formées d'une pluralité d'éléments nickel-cadmium reliés en série.

9. Bateau ou navire selon l'une des revendications précédentes, **caractérisé en ce que** le boîtier (22) précité est monté sur la coque (10) du bateau ou du navire par un système de bras (32, 34, 36) formant trapèze articulé et permettant de déplacer le boîtier (22) vers le haut d'abord sensiblement parallèlement à lui-même depuis une position inférieure, puis par basculement autour d'un axe transversal horizontal (38) pour le sortir de l'eau.

10. Bateau ou navire selon l'une des revendications précédentes, **caractérisé en ce qu'**il est du type catamaran et est équipé de deux systèmes de propulsion à moteur électrique du type précité, montés chacun sur une coque (10) du bateau ou navire.

11. Bateau ou navire selon l'une des revendications 1 à 3 et 5 à 8, **caractérisé en ce que** ladite hélice est remplacée par une turbine, entraînée directement par le moteur électrique.

12. Bateau ou navire selon l'une des revendications 1 à 7, **caractérisé en ce que** l'ensemble moteur-réducteur-hélice ou ensemble propulseur (86) est porté par une structure de support (92, 98) s'étendant à l'intérieur d'un puits (82) formé dans la coque du bateau ou du navire, ce puits ayant des dimensions transversales permettant le passage de l'ensemble propulseur (86) par l'intérieur du puits pour son montage sur le bateau ou navire et son démontage.

13. Bateau ou navire selon l'une des revendications précédentes, **caractérisé en ce que** ladite structure de support comprend un caisson (92) remplissant sensiblemeat le puits (82) et fixé de façon amovible à ce dernier, et un montant (98) solidaire de l'ensemble propulseur (86) et traversant le caisson (92) en étant supporte et guidé dans ce dernier.

## Patentansprüche

1. Schiff oder Wasserfahrzeug mit elektrischem Antrieb, der wenigstens einen Elektromotor (54), der in einem dichten Gehäuse (22) angeordnet ist, das eintauchbar und gegebenenfalls orientierbar ist, eine Schiffsschraube (26), die an einer Ausgangswelle des Gehäuses (22) befestigt ist, um von dem Motor in Drehung versetzt zu werden, elektrische Batterien (46) zur Versorgung des Motors und Mittel zum Aufladen der Batterien umfasst, **dadurch gekennzeichnet, dass** der Motor (54) ein Wechselstrommotor ist und über ein Untersetzungsgetriebe, das im Inneren des genannten Gehäuses (22) angeordnet ist, mit der Schiffsschraube (26) verbunden ist, um wie der Motor durch Wärmeaustausch mit dem Wasser außerhalb des Gehäuses gekühlt zu werden, wobei die Mittel zum Aufladen der Batterien (46) Mittel (68, 70) zur induktiven Verbindung mit einem elektrischen Verteilungsnetz (52) umfasst.

2. Schiff oder Wasserfahrzeug nach Anspruch 1, **dadurch gekennzeichnet, dass** die Mittel zur elektrischen Versorgung des Motors einen Leistungs-Wechselrichter (56) umfassen, der in dem Gehäuse (22) angeordnet ist, um durch Wärmeaustausch mit dem Wasser außerhalb des Gehäuses gekühlt zu werden.

3. Schiff oder Wasserfahrzeug nach Anspruch 1 oder 2, **dadurch gekennzeichnet, dass** der Motor (54) ein selbststeuernder Dreiphasen-Synchronmotor mit einem Rotor mit Dauermagneten oder ein Dreiphasen-Asynchronmotor ist.

4. Schiff oder Wasserfahrzeug nach einem der vorgenannten Ansprüche, **dadurch gekennzeichnet, dass** das Untersetzungsgetriebe ein Untersetzungs-Planetengetriebe ist.

5. Schiff oder Wasserfahrzeug nach Anspruch 4, **dadurch gekennzeichnet, dass** die Verbindungsmittel eine Primärseite (68) aufweisen, die mit dem Verteilungsnetz verbunden ist, und eine Sekundärseite (70) aufweisen, die mit einem Schaltkreis (62) zur Aufladung der Batterien verbunden ist, wobei diese beiden Wicklungen in Mitteln integriert sind, die aus zwei Teilen aufgebaut sind, wobei der eine Teil an dem Schiff oder dem Wasserfahrzeug montiert ist, und der andere Teil an einem Kai, einem Ponton (76) oder dergleichen montiert ist, und wobei sie einen Mechanismus (78) umfassen, der ein Annähern der Wicklungen ermöglicht, um die Batterien aufzuladen.

6. Schiff oder Wasserfahrzeug nach Anspruch 5, **dadurch gekennzeichnet, dass** die Lademittel einen zweiten Ladekreis (64), der parallel zu dem ersten Ladekreis (62) angeordnet ist, und Mittel (66) zum Verbinden durch Ineinanderanschließen des zweiten Ladekreises (64) mit dem elektrischen Verteilungsnetz umfassen, wobei die beiden Ladeschaltkreise vergleichbare oder unterschiedliche Ladekapazitäten aufweisen.

7. Schiff oder Wasserfahrzeug nach einem der vorgenannten Ansprüche, **dadurch gekennzeichnet, dass** die Lademittel zusätzlich foto-voltaische Solarzellenpanele (48) umfassen, die mit den Batterien (46) verbunden sind.

8. Schiff oder Wasserfahrzeug nach einem der vorgenannten Ansprüche, **dadurch gekennzeichnet, dass** die Batterien (46) aus einer Mehrzahl von in Reihe geschalteten Nickel-Cadmium-Elementen gebildet sind.

9. Schiff oder Wasserfahrzeug nach einem der vorgenannten Ansprüche, **dadurch gekennzeichnet, dass** das Gehäuse (22) an dem Rumpf (10) des Schiffes oder Wasserfahrzeuges durch ein System von Armen (32, 34, 36) befestigt ist, die ein mit Gelenken verbundenes Trapez bilden und die es ermöglichen, das Gehäuse (22) von einer tiefergelegenen Position zunächst im Wesentlichen parallel zu sich selbst und anschließend durch Kippen um eine transversale, horizontale Achse (38) zu verlagern, um es aus dem Wasser zu herauszunehmen.

10. Schiff oder Wasserfahrzeug nach einem der vorgenannten Ansprüche, **dadurch gekennzeichnet, dass** es vom Typ eines Katamarans ist, und mit zwei Antriebssystemen mit Elektromotor des genannten Typs ausgestattet ist, die jeweils an einem Schwimmkörper (10) des Schiffes oder Wasserfahrzeuges angebracht sind.

11. Schiff oder Wasserfahrzeug nach einem der Ansprüche 1 bis 3 oder 5 bis 8, **dadurch gekennzeichnet, dass** die Schiffsschraube durch eine Turbine ersetzt ist, die direkt von dem Elektromotor angetrieben wird.

12. Schiff oder Wasserfahrzeug nach einem der Ansprüche 1 bis 7, **dadurch gekennzeichnet, dass** die Baugruppe Motor-Untersetzungsgetriebe-Schiffsschraube oder Antriebsbaugruppe (86) von einer Tragstruktur (92, 98) getragen wird, die sich ins Innere eines Schachtes (82) erstreckt, der in dem Rumpf des Schiffes oder Wasserfahrzeuges gebildet ist, wobei dieser Schacht Querabmessungen aufweist, die den Durchgang der Antriebsbaugruppe (86) durch das Innere des Schachts zu dessen Montage auf dem Schiff oder dem Wasserfahrzeug und zu dessen Demontage erlaubt.

13. Schiff oder Wasserfahrzeug nach einem der vorgenannten Ansprüche, **dadurch gekennzeichnet, dass** die Tragstruktur ein Gehäuse (92) umfasst, dass im Wesentlichen den Schacht (82) ausfüllt und lösbar an diesem befestigt ist, sowie eine Stütze (98), die einteilig mit der Antriebsbaugruppe (86) verbunden ist und das Gehäuse (92) durchquert, wobei es in diesem getragen und geführt wird.

## Claims

1. Electrically propelled boat or ship, comprising at least one electric motor (54) placed in a submersible and optionally directable leaktight housing (22), a propeller (26) mounted on an output shaft of the housing (22) to be rotationally driven by the abovementioned motor, electric batteries (46) for supplying the motor, and battery charging means, **characterised in that** the motor (54) is an AC motor and is connected to the propeller (26) by a gearbox placed inside the abovementioned housing (22) to be cooled, like the motor, by heat exchange with the water outside the housing, the battery charging means (46) comprising means (68, 70) for connection by induction to an electrical energy distribution network (52).

2. Boat or ship according to claim 1, **characterised in that** the electrical supply means for the motor comprise an AC/DC power converter (56) accommodated in the abovementioned housing (22) adapted to be cooled by heat exchange with the water outside the housing.

3. Boat or ship according to claim 1 or 2, **characterised in that** the motor (54) is a self-starting three-phase permanent magnet synchronous rotor motor or a three-phase asynchronous motor.

4. Eoat or ship according to one of the preceding claims, **characterised in that** said gearbox is a planetary gearbox.

5. Boat or ship according to claim 4, **characterised in that** the connecting means comprise a primary (68) connected to the distribution network and a secondary (70) connected to a circuit (62) for charging the batteries, these two windings being integrated in means produced in two parts, one of which is mounted on the boat or ship while the other is mounted on a quay, pontoon (76) or the like, and comprising a mechanism (78) for bringing them close together in order to charge the batteries.

6. Boat or ship according to claim 5, **characterised in that** the charging means comprise a second charging circuit (64) mounted in parallel on the first charging circuit (62) and means (66) for connecting the second charging circuit (64) to the electrical energy distribution network by a plug-in connection, the two charging circuits having similar or different load capacities.

7. Boat or ship according to one of the preceding claims, **characterised in that** the charging means also comprise photovoltaic solar panels (48) connected to the abovementioned batteries (46).

8. Boat or ship according to one of the preceding claims, **characterised in that** the batteries (46) are formed by a plurality of nickel-cadmium elements connected in series.

9. Boat or ship according to one of the preceding claims, **characterised in that** the abovementioned housing (22) is mounted on the hull (10) of the boat or ship by a system of arms (32, 34, 36) forming an articulated trapezium and enabling the housing (22) to be moved upwards initially from a Lower position, substantially parallel to itself, then by swivelling it about a transverse horizontal spindle (38) to lift it out of the water.

10. Boat or ship according to one of the preceding claims, **characterised in that** it is of the catamaran type and is fitted with two electric motor propulsion systems of the abovementioned type, each of which is mounted on a hull (10) of the boat or ship.

11. Boat or ship according to one of claims 1 to 3 and 5 to 8, **characterised in that** the propeller is replaced by a turbine driven directly by the electric motor.

12. Boat or ship according to one of claims 1 to 7, **characterised in that** the motor-gearbox-propeller unit or propulsion unit (86) is carried by a support stricture (92, 98) extending within a shaft (82) formed in the hull of the boat or ship, this shaft having transverse dimensions which enable the propulsion unit (86) to pass trrough the inside of the shaft for mounting on the boat or ship or for removing therefrom.

13. Boat or ship according to one of the preceding claims, **characterised in that** the support structure comprises a box (92) substantially filling the shaft (82) and removably fixed to the latter, and an upright (98) which is integral with the propulsion unit (86) and passes through the box (92) while being supported and guided in the latter.
